# EUROPEAN PATENT APPLICATION

(11) **EP 2 487 871 A1**
(43) Date of publication of application: **15.08.2012**
(21) Application number: 11382035.1
(22) Date of filing: 11.02.2011
(51) Int. Cl.: H04L 29/08

(54) **Method and system for transmission of application status between different devices**

(71) Applicant: Telefónica, S.A., 28013 Madrid (ES)
(72) Inventor: Garcia Puga, Javier, 28013, MADRID (ES); Martinez Alvarez, Javier, 28013, MADRID (ES); Perez Cubero, Roberto, 28013, MADRID (ES)
(74) Representative: Carpintero Lopez, Francisco

(57) **Abstract**

Method and system for transparent transfer of applications opened by an user in a first electronic device to a second electronic device, when the user changes from using the first device to using the second device. The state of each application to be transferred is obtained and sent to the second device through a communication server. The second device will restore the applications using the state data sent, so the applications will have in the second device the same running state and will be started in the same point as they were in the first device. It is not necessary that the first in the second device are connected to the communication network as the same time, i.e. the first device can be shut down after sending the data.

## Description

### TECHNICAL FIELD

The present invention relates generally to the transmission of information between devices in a communication multiplatform network and more particularly to a method and system for the transmission of the current state of the tasks or applications running in one device to another device in a simple, fast and efficient way, in order to allow a user to have a transparent transition of the applications and tasks among the devices he uses.

### DESCRIPTION OF THE PRIOR ART

Nowadays, many users own several devices, such as a desktop pc at home and at work, a laptop or netbook, a smartphone, etc or other types of electronic or computer devices. They are not looking for a unique device, but the one who better adapts to their current situation and context. For instance, at home they prefer a device with keyboard and big screen such as a desktop or laptop, but in mobility, they would rather go with a smartphone or a tablet.

Currently, when a user changes from one device to another, for example, from his desktop PC to his netbook, he spends time recovering the same workspace that he had set up in his other device.

This proposal seeks to provide people with an "instantaneous" transition among devices that he uses every day, recovering not only documents but also the state of his workspace: open documents (including the current position, undo history), tabs in browser, partial searches completed, etc. The continuity would include details about the state of workspace and information or processes running in each device.

Currently there are several alternatives which are used to solve the problem depicted above. One of the simplest approaches would be the usage of the email, for sending urls, content between different devices. The problem with this solution is that only static content can be sent. Furthermore, the user needs to perform several steps for carrying out the action: open the email client, browsing the file system for attaching the content, writing the recipient list, etc. so the whole process isn't very quickly at all. There are also more "manual" alternatives such as copying the content to removable USB drive or copying it to cloud storage devices, for accessing the content later from a different device. However, these methods have the same issues than the previous one: impossibility of working with states of running applications, numbers of steps required for performing action, speed, etc.

Apart from that, there are other systems and technologies which provide users with a virtualized environment or desktop, such as the Remote Desktop Protocol, a proprietary protocol developed by Microsoft, which concerns providing a user with a graphical interface to another computer. In this case, since the applications are running in the server or in the cloud, the status of the running applications is maintained, since the different devices have direct access to these servers. However, this approach has couple of important drawbacks. In first place it requires that the devices have any kind of permanent connection with the servers. Additionally, the user experience in small screen devices is very poor, since the virtual desktop needs to be rescaled to the smaller screen of a smartphone.

There are also other virtualization solution at application level, such as Citrix XenApp (on-demand application delivery solution that enables any Windows application to be virtualized, centralized, and managed in the datacenter and instantly delivered as a service to users anywhere on any device). However this virtualization-based alternative has the same problems like the previous one.

There are some patent applications which disclose inventions which can be seen as belonging to the same technical field as the present invention. However they address different problems, the technical solutions proposed are different to the one proposed in the patent application and they do not have the same advantages as the present invention.

For example, US2006/0230076:"Virtually infinite reliable storage across multiple storage devices and storage services", focuses only in storage of files in different servers, and in accessing those files from different locations. But It doesn't propone any method of maintaining the state of the applications whose manage those files.

Generally speaking, the main problems which the existing solutions are:
- Most of the solutions are not able to get & transfer the current state of the applications.
- Manual & tedious process: the user needs to perform several steps for carrying out the transference of the content between the different devices.
- Some virtualization-based solutions require that the devices have any kind of permanent connection with the servers. Additionally, the user experience in small screen devices is very poor, since the virtual desktop needs to be rescaled to the smaller screen of a smartphone.

New tools are therefore required to deal with those challenges.

### SUMMARY OF THE INVENTION

The present invention use a new method and system that will reduce or eliminate the deficiencies present on current tools.

The invention has application, for example, in multiplatform communication systems or networks, and it would allow an user to send the current state of the tasks they are running in one of their devices (i.e. PC at home) to other (netbook, mobile, PC at work, etc.). In a very simple way and almost instantaneously (e.g. with a simple click), without having to save the content or sending it previously, etc...

For the information transfer, the existing constraints of the target device are, obviously, taking into account existing constraints. For example, if the mobile could only display the Word document and take notes but not edit, or the screen size of the target device.

In a first aspect, it is presented a method for transparent transfer of applications opened by an user in a first electronic device to a second electronic device, when the user changes from using the first device to using the second device, the method comprising the following steps:
a) Selecting the applications running in the first electronic device to be transferred to the second electronic device
b) For each selected application, a communications hub of the first device obtaining the application state data, where the application state data will be all the information necessary to restore the same running status of the application in the second device, to continue running the application from the same point and with the same conditions as when the applications were selected to be transferred from the first to the second device.
c) The communications hub including in at least one message, the application state data of all the selected applications or information to obtain said application state data.
d) The communications hub of the first device sending said at least one message to a communication server through a communication network, the communication server having the routing information of the second device.
e) The communication server sending said at least one message to a communications hub of the second device, if the second device is not reachable, the communication server will save the message and will send it to the second device when said second device is reachable.
f) The communication hub of the second device receiving the at least one message.
g) For each selected application, when the application is opened by the user in the second device, the communication hub of the second device restoring the same running state the application had when the application was selected to be transferred from the first to the second device, using the information state data of the application included in the at least one message.

In a second aspect, it is presented a system for transparent transfer of applications opened by an user in a first electronic device to a second electronic device, when the user changes from using the first device to using the second device, the system comprising:
The first device including:
   A selection module which selects the applications running in the first electronic device to be transferred to the second electronic device.
   A communications hub which obtains the application state data of each selected application, where the application state data will be all the information necessary to restore the same running status of the application in the second device, to continue running the application from the same point and with the same conditions as when it was selected to be transferred from the first to the second device,; the communications hub includes in at least one message, the application state data of all the selected applications or information to obtain said application state data and sends said at least one message to the communication server through a communication network.

A communication server which has the routing information of the second device; the communication server receives the at least one message from the first device and sends said at least one message to a communications hub of the second device through a communication network, if the second device is not reachable, the communication server saves the message and sends it to the second device when said second device is reachable.

The second device including:
A communications hub which receives the at least one message and when each selected application is opened by a user in the second device, it restores the same running state the application had when the application was selected to be transferred from the first to the second device, using the information state data of the application included in the at least one message.

Finally, a computer program comprising computer program code means adapted to perform the above-described method is presented.

For a more complete understanding of the invention, its objects and advantages, reference may be had to the following specification and to the accompanying drawings.

### BRIEF DESCRIPTION OF THE DRAWINGS

To complete the description and in order to provide for a better understanding of the invention, a set of drawings is provided. Said drawings form an integral part of the description and illustrate a preferred embodiment of the invention, which should not be interpreted as restricting the scope of the invention, but rather as an example of how the invention can be embodied. The drawings comprise the following figures:
Figure 1 represents a block diagram of the main arquitecture of an embodiment of the present invention.
Figure 2 represents a block diagram which illustrates some of the process which can be implemented to obtain the Application State Data.
Figure 3 represents a flowchart showing the process when the application state is sent using the mechanism proposed in the invention.

Corresponding numerals and symbols in the different figures refer to corresponding parts unless otherwise indicated.

### DETAILED DESCRIPTION OF THE INVENTION

The invention is mainly composed of the following modules/actions which will be depicted in the next sections of the document.
- Obtaining the state of running applications. Depending on the kind of application and its grade of openness, the approach will vary. For instance, plug-ins or add-ins for applications which provide some kind of extensibility; an API (application programming interface) for developers so they can include in their applications the functionalities required for storing and recovering its state; and lastly, hacking/hooking mechanisms for getting the state of applications which doesn't provide any kind of extensibility methods.
- A push notification mechanism for transferring and adapting this status and the related dependencies (content, files, etc.) between the different devices through a communication network (in an embodiment of the present invention the first and second device could be connected to different communication networks and the communication server will be serve as interface between both networks).
- A mechanism for recovering the state and embedding it the right application when a user.

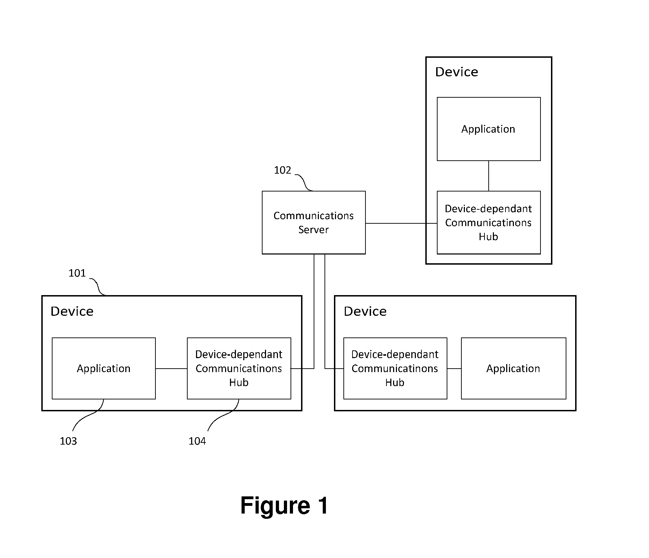

An overall view of the invention architecture is shown in figure 1.

There are different devices (101) owned by a certain user which are connected by one or more communication networks. These devices can be desktop computers, mobile phones or other types of devices. Each device has different running applications (103). The purpose of the invention is to allow the applications to transfer its state in a seamless transparent way. The key part in each device is the Communications Hub (104), this element is able to grab or request the state of the running applications. After grabbing the state, the communications hub sends the state to the communications server (102) over the network. This server is responsible of managing the connections of different hubs across different devices. When a Hub sends an application state, the Communications Server will route the state to the receiver hub in a different device. After receiving the state by the remote hub, it is able to start the same application and hand that state over the new application, completing the application state transfer process. In the end, we have the same application, running in a different device, but departing from the state of the former device.

The communication between the different Device Hubs is made through a Communication Server and using, for example, XMPP (Extensible Messaging and Presence Protocol) as mechanism of message serialization. This communications server is the responsible of routing the messages from the sender to the receiver. If the receiver is not reachable when the sender sends the message, the server will save the message and will deliver it when receiver is available.

The invention uses the XMPP message structure as a container to transport the state of the running application, that is, the Application State Data is transported in the Message Body of an XMPP Standard Message between the sender hub and the receiver hub. The application state data is where the host application input its state, and it is the data which uses the receiver to restore the same running state when launching the applications in the second device (receiver).

The inclusion of the application state inside the XMPP message, can be done using different methods, for example:
- To encode the application state data itself inside the XMPP container/body, i.e. the application puts all the state data directly in the XMPP message. With this method, there is no need of any other storage method in the server side, as the state goes along with the XMPP message, but on the other hand, this method is slower, as the size of the message can be very large.
- Serialize the application state, upload the state to a storage server and send an identifier (e.g. the URI) to the "just-uploaded" data in the XMPP message body. In this case, the communication hub will store the state in a storage server, and the receiver will grab the state using the identifier encoded in the XMPP message which points to the data stored in the storage server. This method is more complicated than the former as it needs a storage server, but it is faster when the application state data is large.

As the invention uses the standard message as the carrier, the communication server can be any XMPP server.

The application state data will be all information the application consider necessary in order to restore its current status in a different device, i.e. all information a different device will need to continue running the application from the same point and with the same conditions as when it was stopped in the previous device.

For example, the application state data of a Word document is the contents of the document itself, the position of the editing cursor and the data of the current clipboard. Another example, the application state data of a chess game is the state of the board and the player who will move the next or in the case of a Internet Explorer, the application data will be the URL, the position of the scroll and the necessary data (as cookies or session-id) to restore the same environment in the receiver machine.

The invention doesn't limit the type of the data which each application decides to include in the put inside the message. It will depend on the application to identify all the necessary data to be able to restore its state in the receiver.

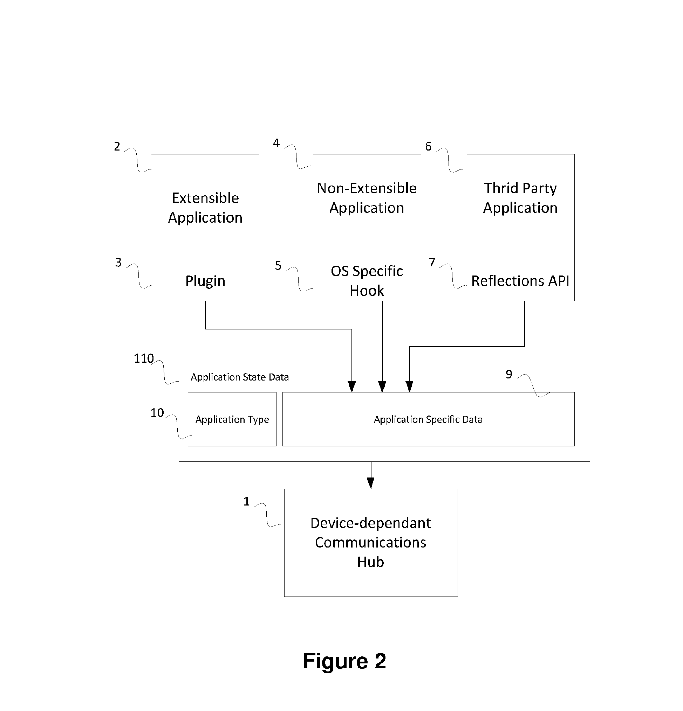

The step of obtaining ("grabbing") the state of the running applications can be performed using different techniques or process (shown in figure 2), for example:
- Using Application Specific Plugins (3). This method is used when the application allows to be extended, giving the possibility of developing customized plugins (a set of components that adds specific capabilities to a larger application) to add to the application the functionality of grabbing its state. That is, not only is needed that the application can be extended with customized plugins, but also that the application (2) should allow the plugin to get/grab its state. After grabbing the state, the plugin will communicate with the Device Communications Hub (1) in order to send the application state. In this scenario, a different plugin is needed to be developed for each application. The extension mechanism using plugins is totally dependent on the architecture of the application itself. Examples of this method would be a Microsoft Office Plugin, or a Firefox browser plugin.
- Using the Reflections API, Applications Programmer Interface (7). The solution implies a set of procedure calls implemented in the Device-dependant communications hub which will be used by the application. These applications (6) will implement the methods required by the reflections API and will able to send the state of the application themselves, and without requiring extra work by anybody else. That is, the developers of the application, uses the set of local procedure calls provided by the API interface, to include in their application code for sending the application state through the network. The application code will pack the application state and then, using this set of procedure calls, send it seamlessly to a different client. The main difference with the first option is that in this case the developer of the application which will be reflected doesn't need to provide any extension mechanism, he can implement the necessary mechanism to make his application "reflectable" by itself. Moreover, using this method, the amount of state data which can be sent using the reflection method could be lower, as the developer is implementing directly the application-state transfer mechanism. In the first option, the application only provides a general extension method and someone else must develop the extension which allows to obtain the application state.
- Using Operating system mechanism to look into running applications. In the case of applications (4) which don't support any of the above referenced mechanisms, the process of grabbing its state will be done by these Operating System Mechanisms, called "hooks" (5). In this case, the process will be initiated by the Device Dependent Communications Hub [1]. The Device-Dependant Communications Hub will use OS-specific mechanism to try to grab the application state from the running application. In the case of Windows Platform, this will be done using the operating system messages which are supported within the OS. In example, we can grab the state of a "notepad" application without needing the notepad to provide anything, just using standard Windows messages. After grabbing the state, using this kind of mechanism, it will send the data through the device-dependant communications hub.

The first (plugin) and the second (Reflection API) options are desirable, if none of them are available, then, the last option is applied in order to grab the application state. The plugin and the Reflection API option are different in the way the process is done. Using the plugin option, the original developer needs to make his application extensible but in general terms, this "extension point" can be used for different plugins. Taking the example of Microsoft Word, this application offers a plugin architechture and there are several plugins which do different things. In this case, the plugin should be developed by "the Reflections side", i.e not by the original developer but by another developer which wants to add to the original application the functionality of obtaining its state. In the case of the API, the developer explicitly makes his application reflectible (the state of said application is suitable to be transferred to another device). If the developer decides to make his application reflectible, it is the developer of the original application who is responsible of doing this. In contrast of the Word example, an example of this case will be a chess game developer who wants to make its chess game reflectable but without implementing a general plugin mechanism. In this case the chess game developer will use the tools provided by the reflections API directly.

All application state "grabbing" options have in common the Application State Data (110) message format which is sent from the applications to the communications hub. In this message format, the applications put their state inside the Application Specific Data (9) Field and set the Application Type (10) field to the specific data type value correspondent to the given application.

For example, in a given chess game, Message body will be: [Event "SrcChess Game"][Site "SrcChess Location"][Date "2011.02.01 "][Round "1"][White "Player 1"][Black "Player 2"][Result "*"][WhiteType "program"][BlackType "human"][TimeControl "?:139317471:139208731 "]1. f4 e6 2. d3 Qh4+ 3. g3 Qh5"

Later on, when the remote hub receives said message, it can restore the state of the application taking off the application state data from the standard message (in the preferred embodiment and XMPP message). This message acts as the common information interchange unit between the different set of running applications and the desktop communications hub.

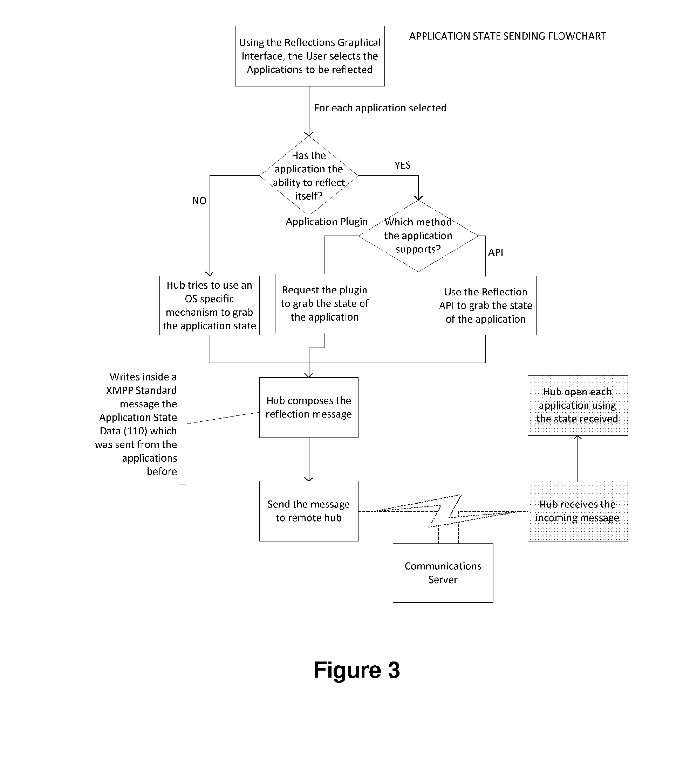

In the flowchart of figure 3, the complete process when the application state is sent using the mechanism proposed in the invention is shown.

Using a Graphical Interface, the User selects the applications to be reflected (reproduced in the "receiver" device).

Then, for each application selected:
If the application has the ability to reflect itself, depending on the type of reflection supported by the application, the plugin will be requested to grab and send to the Hub the application state or the Reflection API will be used to grab the state of the application and send it to the Hub.
If not, the hub uses an Operating System specific mechanism to grab the application state.
The Hub composes the Application State message (reflection message). That is, the Hub writes in the body of an standard message (e.g. an XMPP message) the Application State data.
The Hub sends the message to the remote (receiver) Hub through the communication server.
The remote (receiver) Hub receives the incoming message.
The receiver Hub open each application using the information received about the State.

The role of the communications server is to coordinate and "route" the messages among the different hubs in the different devices. To put an example, it will be as the messaging server in a messaging network as Google Talk, or Microsoft Messenger. The hub sends the message to the server, filling the address of the remote hub in the "to" field. Then the communications server will send the message to the remote hub.

In an exemplary embodiment the communication server will save the different locations where the user is logged on, allowing to send a message from a device to the rest of devices the user is logged on.

Hence, in this invention, some novel and inventive actions have been mentioned. For example:
Sending the state of a running application from an extension point provided by the application itself. In this case, the application should offer a point of extension like being plug-in enabled. A small program running in this plug-in area will grab its state and send it to the device communication hub.

Grabbing the state of a running application without the active collaboration of the given application. This application doesn't need to expose any point of extension nor implement any kind of API. The invention exposed should be able to grab the state of the application by itself.

Providing a set of local procedure calls in order to third-party application developers can include in their application code for sending the application state through the network. The application code will pack the application state and then, using this set of procedure calls, send it seamlessly to a different client. When the state is received, the application can have its state restored using the same set of procedure calls.

Restoring the state when starting a new application in a different device which generated the application state data. When the state is received in this different device over the network, it will start the application which can handle the application state data received, and the device-dependant communications hub will hand the state over to the recently launched application restoring the same state the application had previously. In a preferred embodiment, the applications in the second device are used by the same user of the first device, but in another embodiment they could be used by any other user of the second device.

Using a standard messaging protocol to act as a carrier to the application state. As the Invention encapsulate the application state inside a standard XMPP message, any XMPP communication infrastructure can support the state sending procedure exposed by this invention.

Method of Out-of-the-Band data sending using XMPP messages. When the data is uploaded to a storage server, and the Uri of the resource is sent using the message, we are actually sending the data out-of-the-band of the message. The server infrastructure doesn't need to make any change to support this kind of data sending. The client is the element which is responsible of uploading and retrieving the data using the data sent in the XMPP message.

Summarizing, the advantages of the present invention are:
- The process of restoring a state of a running application in a different device in which the application was started is fully transparent to both the application and the user. Both sides don't need to handle the network communication.
- The use of a standard messaging protocol to transfer the application states makes ease the process of deployment. The invention can work over any standard XMPP network and does not require extra server deployment.
- Given the three scenarios about state grabbing, the invention is able to take the state of applications even without requiring them to implement any special mechanism.
- Using the API proposed in the invention, third-party application developers can make their applications "state-transferable" without knowing the details of the transfer method nor the network architecture
- Using the method for Out-of-the-Band sending data, the receiver peer doesn't need to be connected to the network when the transfer takes place. It can take the data when it connects to the network, later on.
- As the invention gives the possibility of sending the state of several applications inside a single message, the user can rebuild their workspace with only a couple steps, in contrast of current methods which, when possible, requires a lot of steps.
- The application state is saved in stream of data which can be stored as a regular file in the file system or be sent over the network. Thank to this method of application state saving mechanism, when the sender sends the application state, the receiver doesn't need to be connected to be able to retrieve the application state. If the receiver is not online, the Communications Server will store the application state and it will deliver the data when the receiver is online again. This is a clear advantage over virtualization solutions. In a virtualized scenario, the sender must be switched on, and connected to the network in order the receiver to manage the same application.

Although the present invention has been described with reference to specific embodiments, it should be understood by those skilled in the art that the foregoing and various other changes, omissions and additions in the form and detail thereof may be made therein without departing from the spirit and scope of the invention as defined by the following claims.

## Claims

1. A method for transparent transfer of applications opened by an user in a first electronic device to a second electronic device, when the user changes from using the first device to using the second device, the method comprising the following steps:
a) Selecting the applications running in the first electronic device to be transferred to the second electronic device.
b) For each selected application, a communications hub of the first device obtaining the application state data, where the application state data will be all the information necessary to restore the same running status of the application in the second device, to continue running the application from the same point and with the same conditions as when the applications were selected to be transferred from the first to the second device.
c) The communications hub including in at least one message, the application state data of all the selected applications or information to obtain said application state data.
d) The communications hub of the first device sending said at least one message to a communication server through a communication network, the communication server having the routing information of the second device.
e) The communication server sending said at least one message to a communications hub of the second device, if the second device is not reachable, the communication server will save the message and will send it to the second device when said second device is reachable.
f) The communication hub of the second device receiving the at least one message.
g) For each selected application, when the application is opened by the user in the second device, the communication hub of the second device restoring the same running state the application had when the application was selected to be transferred from the first to the second device, using the information state data of the application included in the at least one message.

2. A method according to any of the previous claims where the first and second device can be a Personal Computer or a laptop or a netbook or a notebook or a tablet computer or a mobile phone.

3. A method according to any of the previous claims where the at least one message is an XMPP standard message.

4. A method according to any of the previous claims where the communications hub of the first device stores the application state data in a storage server and in step c), the information included in the message to obtain the application state data is the address of a server where the data is stored.

5. A method according to any of the previous claims the communication hub of the first device sends one message to the communication server for each application selected, each message including the application state data of one of the applications selected or information to obtain said application state data.

6. A method according to any of the previous claims where the applications selected are stopped after being selected to be transferred and the first device is shut down after sending the at least one message.

7. A method according to claim to any of the previous claims where the step of obtaining the application state data for each selected application by a communications hub of the first device, includes for each selected application:
- If the application does not have the functionality of obtaining and reporting its state, the communications hub of the first device uses an Operating system specific mechanism to request and obtains the application state data of the application.
- If the application has the functionality of obtaining and reporting its state, said functionality is used to obtain the application state data of the application and reports the state to the communications hub.

8. A method according to claim 7 where the functionality of obtaining and reporting the state of the application, has been included in the original application using Reflection Application Programming Interface, API, instructions.

9. A method according to claim 7 where the application allows to be extended with customized functionalities and the functionality of obtaining and reporting the state of the application does not form part of the original application, but has been added to the application as a customized functionality.

10. A method according to any of the previous claims where the selected applications are all the applications opened by the user.

11. A method according to any of the previous claims where the applications to be transferred are selected by the user.

12. A method according to any of the previous claims where, when the communications hub of the second device receives the at least one message, the communications hub of the second device will notify the user of the second device.

13. A system for transparent transfer of applications opened by an user in a first electronic device to a second electronic device, when the user changes from using the first device to using the second device, the system comprising:
The first device including:
A selection module which selects the applications running in the first electronic device to be transferred to the second electronic device.
A communications hub which obtains the application state data of each selected application, where the application state data will be all the information necessary to restore the same running status of the application in the second device, to continue running the application from the same point and with the same conditions as when it was selected to be transferred from the first to the second device,; the communications hub includes in at least one message, the application state data of all the selected applications or information to obtain said application state data and sends said at least one message to the communication server through a communication network.
A communication server which has the routing information of the second device; the communication server receives the at least one message from the first device and sends said at least one message to a communications hub of the second device through a communication network, if the second device is not reachable, the communication server saves the message and sends it to the second device when said second device is reachable.
The second device including:
A communications hub which receives the at least one message and when each selected application is opened by a user in the second device, it restores the same running state the application had when the application was selected to be transferred from the first to the second device, using the information state data of the application included in the at least one message.

14. A computer program comprising computer program code means adapted to perform the method according to any claims from 1 to 12 when said program is run on a computer, a digital signal processor, a field-programmable gate array, an application-specific integrated circuit, a micro-processor, a micro-controller, or any other form of programmable hardware.
